# FASCICULE DE BREVET EUROPEEN

(11) **EP 3 244 508 B1**
(45) Date de publication et mention de la délivrance du brevet: **16.02.2022**
(21) Numéro de dépôt: 17170630.2
(22) Date de dépôt: 11.05.2017
(51) Int. Cl.: H02J 7/00, B60N 3/02

(54) **INTERFACE USB POUR RECHARGEMENT D'APPAREIL ÉLECTRONIQUE, DESTINÉE À ÉQUIPER UN VÉHICULE DE TRANSPORT**
USB-SCHNITTSTELLE FÜR DAS AUFLADEN EINES ELEKTRISCHEN GERÄTS, DIE ZUR AUSRÜSTUNG EINES TRANSPORTFAHRZEUGS BESTIMMT IST
AN USB INTERFACE FOR RECHARGING AN ELECTRONIC DEVICE, INTENDED TO EQUIP A TRANSPORT VEHICLE

(30) Priorité: 12.05.2016 FR 1654256
(43) Date de publication de la demande: 15.11.2017
(73) Titulaire: ALSTOM Transport Technologies, 93400 Saint-Ouen (FR)
(72) Inventeur: PREVOST, Thomas, 17340 YVES (FR); TAILLANDIER, Sébastien, 17690 ANGOULINS (FR)
(74) Mandataire: Lavoix

(56) Documents cités:
- CN-U- 202 481 000
- CN-U- 203 005 168
- CN-U- 204 068 390
- CN-U- 204 179 712
- US-A1- 2015 333 461
- US-B2- 8 444 432
- Vítezslav Bures (Bur): "VIDEO: Konec vybitým mobilum. Ropid zkousí autobus s USB nabíjeckami", iDNES.cz , 20 avril 2014 (2014-04-20), XP002766187, Extrait de l'Internet: URL:http://praha.idnes.cz/primestky-autobu s-je-vybaven-usb-nabijeckou-f3c-/praha-zpr avy.aspx?c=A140819_123517_praha-zpravy_bur [extrait le 2017-01-20]

## Description

La présente invention concerne une interface USB pour rechargement d'appareil électronique, destinée à équiper un véhicule de transport, de préférence un véhicule de transport public urbain.

Dans certains cas, on prévoit d'équiper un véhicule de transport public avec des interfaces USB, permettant à des passagers de recharger un appareil électronique, par exemple un smartphone ou une tablette.

De telles interfaces sont portées par un équipement dédié. Le véhicule de transport ne comporte que peu de tels équipements dédiés, car ceux-ci viennent empiéter sur l'espace utilisable pour accueillir des passagers ou pour recevoir d'autres équipements.

CN 204 179 712 U décrit également une interface USB similaire à celle définie dans le préambule de la revendication 1.

L'invention a notamment pour but d'améliorer la situation, en proposant d'améliorer l'accès à des interfaces USB, sans nuire à la capacité d'accueil de passagers du véhicule.

A cet effet, l'invention a notamment pour objet une interface USB selon la revendication 1.

Les interfaces USB selon l'invention peuvent être agencées le long de toute barre de maintien pour passagers, si bien qu'elles ne sont disposées que sur des équipements (les barres) préexistant dans le véhicule.

En particulier, dans le cas de bus, les barres de maintien sont déjà équipées de boitiers de bouton d'arrêt, destinés à prévenir le conducteur qu'un passager souhaite un arrêt à la prochaine station. Les interfaces USB selon l'invention présentent des dimensions similaires à celles de tels boîtiers de bouton d'arrêt, et peuvent être disposés sur les mêmes barres de maintien ou en remplacement de ces boîtiers.

De telles interfaces USB ne sont pas encombrantes, et peuvent être disposées à de multiples endroits dans le véhicule, et donc être faciles d'accès pour un nombre satisfaisant de passagers.

Une interface USB selon l'invention est définie dans la revendication indépendante 1.
- L'interface USB comporte des moyens de fixation amovibles d'au moins une partie de l'organe électronique avec le boitier de support, les moyens de fixation amovibles comprenant par exemple au moins une vis pointeau.
- La seconde partie amovible comporte : une face avant, comprenant chaque prise USB, une face arrière, comprenant chaque broche ou fiche, des faces intermédiaires s'étendant entre les faces avant et arrière, les faces intermédiaires et le logement comprenant des moyens de guidage complémentaires pour guider la seconde partie amovible lors de son insertion et de son retrait dans le logement.
- Le boitier de support comprend une face de contact avec la barre de maintien et dans laquelle le logement s'étend suivant un axe central sensiblement perpendiculaire à la face de contact.

L'invention concerne également un véhicule de transport, comportant une salle de passagers comprenant au moins une barre de maintien, caractérisé en ce qu'il comporte au moins une interface USB telle que définie précédemment, dont le boitier de support est fixé sur la barre de maintien et dans lequel un câblage passe dans la barre de maintien, ce câblage étant connecté à l'organe électronique.

L'invention concerne enfin un ensemble d'équipements pour un véhicule de transport, le véhicule de transport comportant au moins une barre de maintien, l'ensemble d'équipements comprenant un dispositif de demande d'arrêt du véhicule comprenant un bouton poussoir, caractérisé en ce qu'il comporte une interface USB pour rechargement d'appareil électronique telle que définie précédemment, et en ce que le dispositif de demande d'arrêt du véhicule comprend un boitier de support identique au boitier de support de l'interface USB, dont le logement reçoit le bouton poussoir.

L'invention sera mieux comprise à la lecture de la description qui va suivre, donnée uniquement à titre d'exemple, et faite en se référant aux figures annexées, parmi lesquelles :
- La figure 1 est une vue en perspective d'une interface USB selon un premier exemple de mode de réalisation qui n'est pas couvert par les revendications;
- La figure 2 est une vue en perspective éclatée d'une interface USB selon l'invention.

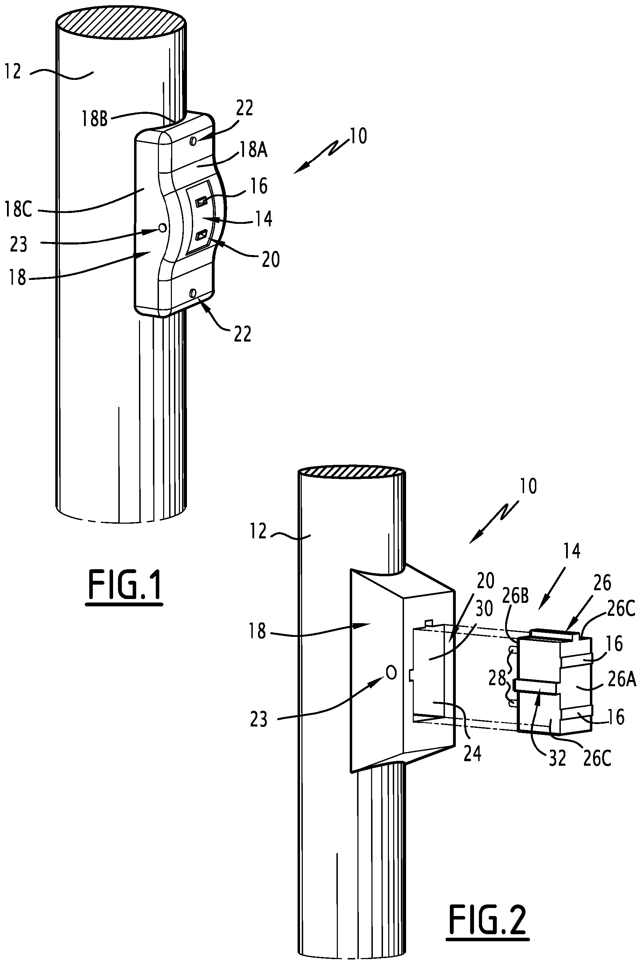

On a représenté, sur la figure 1, une interface USB 10 selon un premier exemple de mode de réalisation qui n'est pas couvert par les revendications. Une telle interface 10 est destinée au rechargement de la batterie d'un appareil électronique, par exemple d'un smartphone ou d'une tablette. Ce mode de rechargement de batterie via connexion USB est classique, et ne sera donc pas décrit en détail.

L'interface 10 est destinée à équiper un véhicule de transport, de préférence un véhicule de transport public urbain, et plus particulièrement un bus. En variante, elle peut équiper un tramway ou un métro.

Le véhicule de transport comporte une barre de maintien 12, destinée à être tenue par un passager en position debout. La barre de maintien 12 s'étend généralement verticalement, mais elle pourrait en variante s'étendre horizontalement, ou selon une direction oblique.

L'interface 10 comporte un organe électronique 14 comprenant au moins une prise USB 16, et des éléments de connectique propres à relier chaque prise USB à un câblage. La structure électronique de la prise USB 16 et des éléments de connectique est classique, si bien qu'un homme du métier n'aura aucun mal à la réaliser.

Par exemple, l'organe électronique 14 comporte deux prises USB 16.

L'interface 10 comporte par ailleurs un boitier de support 18, conformé pour être fixé sur la barre de maintien 12, le long de la barre de maintien 12, et comportant un logement 20 pour l'organe électronique 14. Le boitier de support 18 est par exemple réalisé en plastique.

Le boitier de support 18 comporte une surface avant 18A destinée à être tournée vers les passagers, dans laquelle débouche le logement 20. Les prises USB 16 sont donc accessibles du côté de cette surface avant 18A.

Le boitier de support 18 comporte par ailleurs une forme arrière 18B, opposée à la surface avant 18A, et destinée à être appliquée contre la barre de maintien 12. Ainsi, la forme arrière 18B présente une courbure complémentaire de celle de la barre de maintien 12.

La forme arrière 18B définit une face de contact avec la barre de maintien. Il est à noter que le logement 20 s'étend suivant un axe central sensiblement perpendiculaire à cette face de contact.

Le boitier de support 18 comporte également des surfaces latérales 18C s'étendant entre la surface avant 18A et la forme arrière 18B.

L'interface 10 comporte par ailleurs des moyens 22 de fixation sur la barre de maintien 12. Ces moyens de fixation 22 comportent par exemple des vis, accessibles depuis la surface avant 18A.

Dans cet exemple, le boitier de support 18 présente une forme similaire à celle d'un boitier de bouton d'arrêt usuellement utilisé dans un bus. Les moyens de fixation 22 à vis sont également les mêmes que ceux utilisés pour un tel boitier de bouton d'arrêt.

On notera que ledit câblage est logé de manière classique dans la barre de maintien 12, de la même manière que pour un boitier de bouton d'arrêt de bus de l'état de la technique.

Avantageusement, l'organe électronique 14 est fixé au boitier de support 18 de manière au moins partiellement amovible. Par les termes « au moins partiellement amovible », on entend qu'une partie de l'organe électronique 14 est amovible, ou qu'il est entièrement amovible.

A cet effet, on prévoit des moyens 23 de fixation amovibles de l'organe électronique 14 dans le logement 20. Ces moyens de fixation 23 sont dits amovibles lorsqu'ils permettent le retrait d'au moins une partie de l'organe électronique 14, sans détérioration de l'organe électronique 14, du boitier de support 18 ou de ces moyens de fixation 23.

Les moyens de fixation amovibles 23 comportent par exemple au moins une vis pointeau, accessible depuis l'une des surfaces latérales 18C du boitier de support 18. Une telle vis pointeau comporte une tête munie d'une forme d'engagement particulière, par exemple formée par trois trous destinés à recevoir un outil spécifique pour le serrage ou le desserrage.

On a représenté sur la figure 2 une interface 10 selon l'invention. Sur cette figure, les éléments analogues à ceux de la figure 1 sont désignés par des références identiques. L'organe électronique 14 comporte une première partie fixe 24, fixée dans le logement 20 du boitier de support 18, et destinée à être connectée au câblage, et une seconde partie amovible 26, portant chaque prise USB 16.

Les première 24 et seconde 26 parties sont connectables de manière amovibles.

A cet effet, l'une des première 24 et seconde 26 parties comporte par exemple au moins une broche de connexion 28, notamment deux broches de connexion 28, et l'autre des première 24 et seconde 26 parties comporte, pour chaque broche de connexion 28, au moins une fiche respective 30 complémentaire.

Dans l'exemple décrit, les broches sont portées par la seconde partie 26, et les fiches par la première partie 24. Les première 24 et seconde 26 parties comportent des moyens 32 de détrompage complémentaires destinée à ce que chaque broche 28 soit bien connectée dans la fiche 30 respective correspondante, et non pas dans une autre. Les moyens de détrompage 32 comportent par exemple un ergot de détrompage porté par la seconde partie 26, et une encoche de réception portée par la première partie 24.

Comme cela est représenté sur la figure 2, la seconde partie amovible 26 comporte :
- une face avant 26A, comprenant chaque prise USB 16,
- une face arrière 26B, comprenant chaque broche 28, et
- des faces intermédiaires 26C s'étendant entre les faces avant 26A et arrière 26B, les faces intermédiaires 26C et le logement 20 comprenant des moyens de guidage complémentaires pour guider la seconde partie amovible 26 lors de son insertion et de son retrait dans le logement 20.

Les moyens de guidage sont par exemple simplement formés par les faces intermédiaires elles-mêmes.

Conformément à l'invention, la seconde partie amovible 26 est fixée au boitier de support 18 par les moyens de fixation amovibles 23, qui sont du même type que décrit précédemment.

L'interface 10 selon l'invention a pour avantage de permettre un remplacement facile de prises USB endommagées. En effet, ce remplacement est effectué en remplaçant seulement la seconde partie 26. Ce remplacement ne nécessite pas de toucher aux connexions avec le câblage, mais seulement de retirer des fiches 30 les broches 28 de la seconde partie à remplacer, puis d'introduire les broches de la seconde partie 26 de remplacement dans les fiches 30 correspondantes.

Il apparaît clairement que l'interface 10 selon l'invention est particulièrement simple à mettre en place, et peu encombrante, si bien qu'il est aisé de rendre de telles interfaces 10 disponibles à divers endroits du véhicule.

Avantageusement, l'interface 10 fait partie d'un ensemble d'équipements pour le véhicule de transport, cet ensemble d'équipements comprenant en outre un dispositif de demande d'arrêt du véhicule comprenant un bouton poussoir. Dans ce cas, le dispositif de demande d'arrêt du véhicule comprend avantageusement un boitier de support identique au boitier de support de l'interface USB, dont le logement reçoit le bouton poussoir.

## Revendications

1. Interface USB (10) pour rechargement d'appareil électronique, destinée à équiper un véhicule de transport comportant au moins une barre de maintien (12), comportant :
- un organe électronique (14) comprenant au moins une prise USB (16), et des éléments de connectique propres à relier chaque prise USB (16) à un câblage,
- un boitier de support (18), conformé pour être fixé sur la barre de maintien (12) du véhicule de transport public urbain, et comportant un logement (20) pour l'organe électronique (14),
dans laquelle l'organe électronique (14) comporte :
- une première partie fixe (24), fixée dans le logement (20) du boitier de support (18), et destinée à être connectée au câblage, et
- une seconde partie amovible (26), portant chaque prise USB (16), les première (24) et seconde (26) parties étant connectables de manière amovibles,
**caractérisée en ce que** l'une des première (24) et seconde (26) parties comporte au moins une broche de connexion (28), notamment deux broches de connexion (28), et l'autre des première (24) et seconde (26) parties comporte, pour chaque broche de connexion (28), au moins une fiche respective complémentaire, les première (24) et seconde (26) parties comportant des moyens de détrompage (32) complémentaires destinée à assurer la connexion de chaque broche (28) dans la bonne fiche (30) respective correspondante.

2. Interface USB (10) selon la revendication 1, dans laquelle le boitier de support (18) comporte :
- une surface avant (18A), dans laquelle débouche le logement (20),
- une forme arrière (18B), opposée à la surface avant (18A), et destinée à être appliquée contre la barre de maintien (12).
- des surfaces latérales (18C) s'étendant entre la surface avant (18A) et la forme arrière (18B).

3. Interface USB (10) selon la revendication 1 ou 2, comportant des moyens (23) de fixation amovibles d'au moins une partie de l'organe électronique (14) avec le boitier de support (18), les moyens de fixation amovibles (23) comprenant par exemple au moins une vis pointeau.

4. Interface USB (10) selon l'une quelconque des revendications précédentes, dans lequel la seconde partie amovible (26) comporte :
- une face avant (26A), comprenant chaque prise USB (16),
- une face arrière (26B), comprenant chaque broche (28) ou fiche,
- des faces intermédiaires (26C) s'étendant entre les faces avant (26A) et arrière (26B), les faces intermédiaires (26C) et le logement (20) comprenant des moyens de guidage complémentaires pour guider la seconde partie amovible (26) lors de son insertion et de son retrait dans le logement (20).

5. Interface USB (10) selon l'une quelconque des revendications précédentes, dans laquelle le boitier de support (18) comprend une face de contact avec la barre de maintien (12) et dans laquelle le logement (20) s'étend suivant un axe central sensiblement perpendiculaire à la face de contact.

6. Véhicule de transport, comportant une salle de passagers comprenant au moins une barre de maintien (12), **caractérisé en ce qu'**il comporte au moins une interface USB (10) selon l'une quelconque des revendications 1 à 5, dont le boitier de support (18) est fixé sur la barre de maintien (12) et dans lequel un câblage passe dans la barre de maintien (12), ce câblage étant connecté à l'organe électronique (14).

7. Ensemble d'équipements pour un véhicule de transport, le véhicule de transport comportant au moins une barre de maintien (12), l'ensemble d'équipements comprenant un dispositif de demande d'arrêt du véhicule comprenant un bouton poussoir, **caractérisé en ce qu'**il comporte une interface USB (10) pour rechargement d'appareil électronique selon l'une quelconque des revendications 1 à 5, et **en ce que** le dispositif de demande d'arrêt du véhicule comprend un boitier de support identique au boitier de support de l'interface USB, dont le logement reçoit le bouton poussoir.

## Patentansprüche

1. USB-Schnittstelle (10) zum Aufladen eines elektronischen Geräts, die dazu bestimmt ist, ein Transportfahrzeug auszustatten, umfassend mindestens eine Haltestange (12), umfassend:
- ein elektronisches Organ (14), umfassend mindestens eine USB-Buchse (16) und Verbindungselemente, die geeignet sind, jede USB-Buchse (16) mit einer Verkabelung zu verbinden,
- ein Trägergehäuse (18), das ausgebildet ist, um an der Haltestange (12) des öffentlichen Nahverkehrsfahrzeugs befestigt zu werden, und umfassend eine Aufnahme (20) für das elektronische Organ (14),
wobei das elektronische Organ (14) Folgendes umfasst:
- einen ersten feststehenden Abschnitt (24), der in der Aufnahme (20) des Trägergehäuses (18) befestigt ist und dazu bestimmt ist, mit der Verkabelung verbunden zu werden, und
- einen zweiten abnehmbaren Abschnitt (26), der jede USB-Buchse (16) trägt, wobei der erste (24) und der zweite (26) Abschnitt lösbar miteinander verbunden werden können,
**dadurch gekennzeichnet, dass** einer von dem ersten (24) und dem zweiten (26) Abschnitt mindestens einen Verbindungsstift (28), insbesondere zwei Verbindungsstifte (28), umfasst, und der andere von dem ersten (24) und dem zweiten (26) Abschnitt für jeden Verbindungsstift (28) mindestens einen jeweiligen komplementären Stecker umfasst, wobei der erste (24) und der zweite (26) Abschnitt komplementäre Kodierungseinrichtungen (32) umfassen, die dazu bestimmt sind, die Verbindung von jedem Stift (28) in dem jeweils entsprechenden richtigen Stecker (30) sicherzustellen.

2. USB- Schnittstelle (10) nach Anspruch 1, wobei das Trägergehäuse (18) Folgendes umfasst:
- eine vordere Fläche (18A), in die die Aufnahme (20) mündet,
- eine hintere Form (18B) gegenüber der vorderen Fläche (18A), und die dazu bestimmt ist, gegen die Haltestange (12) gedrückt zu werden,
- Seitenflächen (18C), die sich zwischen der vorderen Fläche (18A) und der hinteren Form (18B) erstrecken.

3. USB-Schnittstelle (10) nach Anspruch 1 oder 2, umfassend Einrichtungen (23) zur lösbaren Befestigung mindestens eines Abschnitts des elektronischen Organs (14) mit dem Trägergehäuse (18), wobei die Einrichtungen zur lösbaren Befestigung (23) beispielsweise mindestens eine Nadelschraube umfassen.

4. USB-Schnittstelle (10) nach einem der vorherigen Ansprüche, wobei der zweite abnehmbare Abschnitt (26) Folgendes umfasst:
- eine Vorderseite (26A), umfassend jede USB-Buchse (16),
- eine Rückseite (26B), umfassend jeden Stift (28) oder Stecker,
- Zwischenflächen (26C), die sich zwischen der Vorderseite (26A) und der Rückseite (26B) erstrecken, wobei die Zwischenflächen (26C) und die Aufnahme (20) komplementäre Führungseinrichtungen zum Führen des zweiten abnehmbaren Abschnitts (26) beim Einsetzen und Herausnehmen in die und aus der Aufnahme (20) umfassen.

5. USB-Schnittstelle (10) nach einem der vorherigen Ansprüche, wobei das Trägergehäuse (18) eine Kontaktfläche mit der Haltestange (12) umfasst und wobei sich die Aufnahme (20) entlang einer Mittelachse erstreckt, die im Wesentlichen senkrecht zu der Kontaktfläche ist.

6. Transportfahrzeug, umfassend einen Fahrgastraum, der mindestens eine Haltestange (12) umfasst, **dadurch gekennzeichnet, dass** es mindestens eine USB-Schnittstelle (10) nach einem der Ansprüche 1 bis 5 umfasst, deren Trägergehäuse (18) an der Haltestange (12) befestigt ist und in der eine Verkabelung durch die Haltestange (12) verläuft, wobei diese Verkabelung mit dem elektronischen Organ (14) verbunden ist.

7. Ausrüstungseinheit für ein Transportfahrzeug, das Transportfahrzeug umfassend mindestens eine Haltestange (12), die Ausrüstungseinheit umfassend eine Vorrichtung zum Anfordern eines Halts des Fahrzeugs mit einem Druckknopf, **dadurch gekennzeichnet, dass** sie eine USB-Schnittstelle (10) zum Aufladen eines elektronischen Geräts nach einem der Ansprüche 1 bis 5 umfasst, und dass die Vorrichtung zum Anfordern eines Halts des Fahrzeugs ein Trägergehäuse umfasst, das mit dem Trägergehäuse der USB-Schnittstelle identisch ist, dessen Aufnahme den Druckknopf aufnimmt.

## Claims

1. A USB interface (10) for recharging an electronic device, intended to equip a transport vehicle including at least one handrail (12), including:
- an electronic member (14) comprising at least one USB jack (16), and connector elements able to connect each USB jack (16) to cabling,
- a support case (18), configured to be fastened on the handrail (12) of the urban public transport vehicle, and including a housing (20) for the electronic member (14),
wherein the electronic member (14) includes:
- a first stationary part (24), fastened in the housing (20) of the support case (18), and intended to be connected to the cabling, and
- a second removable part (26), bearing each USB jack (16), the first (24) and second (26) parts being removably connectable,
**characterized in that** one of the first (24) and second (26) parts includes at least one connecting pin (28), in particular two connecting pins (28), and the other of the first (24) and second (26) parts includes, for each connecting pin (28), at least one respective complementary socket, the first (24) and second (26) parts including complementary mistake-proofing means (32) intended to provide the connection of each pin (28) in the correct corresponding respective plug (30).

2. The USB interface (10) according to claim 1, wherein the support case (18) includes:
- a front surface (18A) in which the housing (20) emerges,
- a rear form (18B), opposite the front surface (18A), and intended to be pressed against the handrail (12),
- side surfaces (18C) extending between the front surface (18A) and the rear form (18B).

3. The USB interface (10) according to claim 1 or 2, including removable fastening means (23) for fastening at least part of the electronic member (14) with the support case (18), the removable fastening means (23) for example comprising at least one cone-pointed set screw.

4. The USB interface (10) according to any one of preceding claims, wherein the second removable part (26) includes:
- a front face (26A), comprising each USB jack (16),
- a rear face (26B), comprising each pin (28) or socket,
- intermediate faces (26C) extending between the front (26A) and rear (26B) faces, the intermediate faces (26C) and the housing (20) comprising a complementary guide means to guide the second removable part (26) when it is inserted in and removed from the housing (20).

5. The USB interface (10) according to any one of the preceding claims, wherein the support case (18) comprises a contact face with the handrail (12) and wherein the housing (20) extends along a central axis substantially perpendicular to the contact face.

6. A transport vehicle, including a passenger room comprising at least one handrail (12), **characterized in that** it includes at least one USB interface (10) according to any one of claims 1 to 5, the support case (18) of which is fastened on the maintaining bar (12) and in which cabling passes in the handrail (12), this cabling being connected to the electronic member (14).

7. A set of equipment for a transport vehicle, the transport vehicle including at least one handrail (12), the set of equipment comprising a stop request device of the vehicle comprising a pushbutton, **characterized in that** it includes a USB interface (10) for recharging an electronic device according to any one of claims 1 to 5, and **in that** the stop request device of the vehicle comprises a support case identical to the support case of the USB interface, the housing of which receives the pushbutton.
